# FASCICULE DE BREVET EUROPEEN

(11) **EP 0 945 942 B1**
(45) Date de publication et mention de la délivrance du brevet: **25.04.2001**
(21) Numéro de dépôt: 99420044.2
(22) Date de dépôt: 18.02.1999
(51) Int. Cl.: H02B 1/56, H02G 9/10

(54) **Coffret de raccordement de câbles, et/ou de contention de circuits électriques**
Kasten zum Verbinden von Kabeln bzw. zur Aufnahme von elektrischen Schaltungen
Cabinet for connecting cables and/or for housing electric circuits

(30) Priorité: 25.03.1998 FR 9804001
(43) Date de publication de la demande: 29.09.1999
(73) Titulaire: POUYET S.A., 94207 Ivry sur Seine (FR)
(72) Inventeur: Biaud, Richard, 44160 Pontchateau (FR); Marsac, Yvonnick, 44530 Dreffeac (FR); Conan, Christophe, 56000 Vannes (FR)
(74) Mandataire: Wind, Jacques

(56) Documents cités:
- DE-U- 8 710 145
- DE-U- 8 800 069
- DE-U- 29 519 260
- FR-A- 2 656 974
- US-A- 5 105 336

## Description

La présente invention se rapporte à un coffret de raccordement de câbles électriques, et/ou de contention de circuits électriques, en particulier de circuits électroniques actifs éventuellement reliés à ces câbles électriques, ce coffret étant étudié pour pouvoir être positionné en extérieur, c'est à dire qu'il peut être placé à l'air libre, en un lieu où il sera soumis aux intempéries.

Les coffrets existant actuellement sont essentiellement destinés au raccordement de câbles électriques.

Ils se présentent sous la forme d'un boîtier comprenant un corps et un couvercle. Le corps se fixe verticalement en extérieur, généralement sur un poteau vertical ou sur un mur, et le couvercle vient généralement s'articuler autour d'un axe (supérieur et horizontal) de ce corps.

De tels boîtiers doivent répondre à des normes très strictes de protection contre les risques de pénétration d'eau de pluie. Une norme en vigueur actuellement est la norme NF EN 60529 qui définit un degré IPx5 de protection à la pénétration d'eau dans le coffret lorsque l'on soumet celui ci à l'arrosage par un jet d'eau dont le débit est d'environ 12 litres par minute.

Ces boîtiers sont donc construits en conséquence, et ils sont de ce fait très peu aérés en ce qui concerne leur volume interne. Au plus, leur corps peut comporter une ou plusieurs grilles d'aération dans sa partie supérieure, ces grilles d'aération étant placées par exemple dans la paroi verticale de fond du corps, et servant en fait à l'évacuation de l'humidité. Une certaine, mais plutôt faible. circulation d'air est alors créée dans l'habitacle par le fait que de l'air pénètre dans la partie inférieure de celui ci essentiellement par les interstices de passage des câbles ainsi qu'autour du pêne de fermeture du couvercle par encliquetage.

Un coffret suivant le préambule de la revendication 1 est décrit dans le document US-A-5 105 336.

Il est actuellement demandé de construire des boîtiers de ce type, qui soient prévus non seulement pour contenir des raccordements de fils électriques, mais encore pour contenir des circuits électroniques actifs, généralement sous la forme de cartes enfichables, dont le fonctionnement engendre un plus ou moins grand dégagement de chaleur.

Compte tenu des exigences des cahiers des charges, ces boîtiers doivent pouvoir supporter des températures extérieures assez élevées, allant jusqu'à par exemple 55°C pour fixer les idées, ce qui n'est pas réalisable avec les boîtiers de l'art connu, compte tenu du fait qu'il n'est pas possible d'augmenter suffisamment les dimensions des grilles d'aération existantes si l'on veut toujours pouvoir respecter le degré requis de protection contre la pénétration d'eau.

L'invention, qui vise à résoudre cette difficulté, propose en conséquence un boîtier dont le volume interne est suffisamment ventilé pour respecter des exigences sévères de tenue en température, tout en respectant néanmoins les normes de protection contre la pénétration d'eau, telle que par exemple le degré « IP x5 » de la norme citée ci dessus.

Elle se rapporte à cet effet à un coffret de raccordement de câbles électriques, et/ou de contention de circuits électriques, en particulier de circuits électroniques actifs, ce coffret se présentant sous la forme d'un boîtier, composé d'un corps et d'un couvercle, qui est destiné à être fixé en position verticale, généralement sur un poteau vertical ou sur un mur,
caractérisé en ce que ce couvercle est conformé pour engendrer, dans le volume interne qu'il délimite lorsqu'il est en place sur ledit corps, une circulation d'air de bas en haut créée par :
- une entrée d'air dans la partie inférieure du boîtier, typiquement créée essentiellement, de manière connue en soi, par les passages de câbles ainsi que par les ouvertures normalement prévues autour du pène de fermeture du couvercle par encliquetage,
- au moins une ouverture dans une première paroi horizontale, interne au boîtier et située dans sa moitié inférieure, cette ou ces ouvertures étant garnies chacune d'une coupelle qui est protubérante vers le bas et qui comporte une grille destinée à éviter la pénétration d'insectes,
- au moins une ouverture dans une deuxième paroi horizontale, interne au couvercle et située dans sa moitié supérieure, cette ou ces ouvertures étant garnies chacune d'une coupelle qui est protubérante vers le haut et qui comporte une grille destinée à éviter la pénétration d'insectes,
- une aspiration d'air par effet Venturi qui est créé par le fait que cette, ou ces, coupelles supérieures traversent une autre paroi supérieure interne du couvercle, cette paroi étant elle aussi sensiblement horizontale, étant percée d'orifices de passage d'air, étant placée au dessus de ladite deuxième paroi interne de manière à délimiter avec celle ci un canal d'évacuation d'eau ainsi que de passage d'une nappe horizontale de circulation d'air ambiant entre les deux faces verticales du boîtier, et formant de surcroît la paroi inférieure d'une chambre qui est ménagée dans l'extrémité supérieure du couvercle, de sorte que l'air qui circule de bas en haut dans le couvercle passe dans cette dernière chambre par les coupelles supérieures, et en ressort par cette dernière paroi, qui est par ailleurs percée de trous en conséquence, pour alors rencontrer la nappe d'air qui circule horizontalement entre ces deux parois supérieures horizontales, ce qui crée ledit effet Venturi .

De toute façon, l'invention sera bien comprise, et ses divers avantages et caractéristiques ressortiront mieux, lors de la description suivante d'un exemple non limitatif de réalisation, en référence au dessin schématique annexé dans lequel :
- Figure 1 est une vue d'ensemble, en perspective, de ce coffret, avec son couvercle ouvert
- Figure 2 est une vue, en coupe verticale selon la ligne brisée II-II de la figure 3, de ce coffret, couvercle fermé
- Figure 3 est une coupe verticale selon la ligne brisée III-III de la figure 2
- Figure 4 est une vue de détail, en perspective partielle et éclatée, de la partie supérieure du couvercle, là où se crée l'effet Venturi selon la présente invention
- Figure 5 est de même une vue de détail du couvercle à l'endroit de son cliquet de fermeture, qui montre comment l'air de ventilation rentre à cet endroit dans le coffret
- Figure 6 est un schéma de principe qui montre, un petit peu plus nettement que sur la figure 2, comment se crée l'aspiration supérieure d'air par effet Venturi.

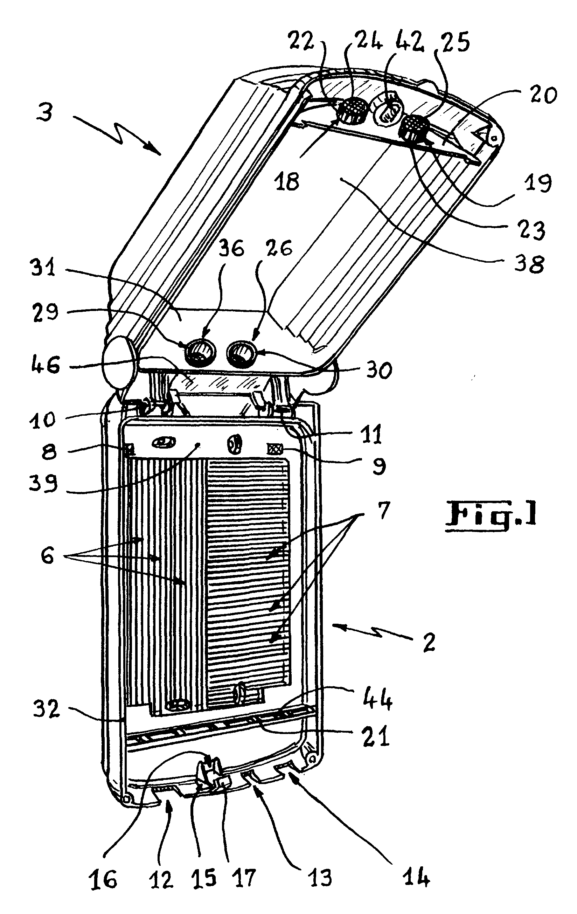

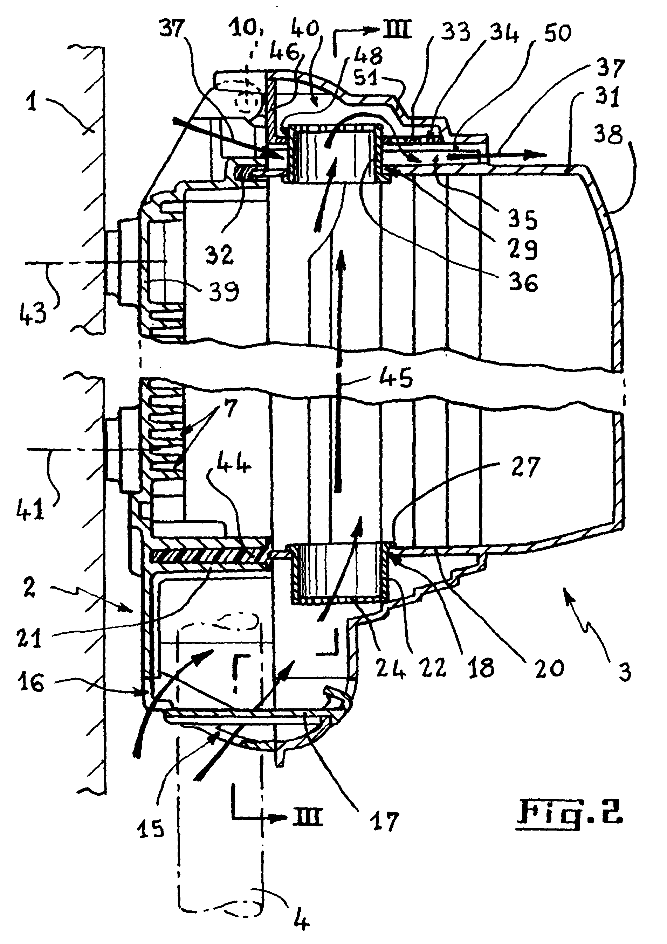

En se référant tout d'abord à l'ensemble des figures 1 à 3, il s'agit d'un coffret qui se fixe par exemple sur un mur vertical 1 (figure 2) par des vissages d'axes 41,43,..., et qui se compose classiquement d'un corps 2 et d'un couvercle de fermeture 3 qui est articulé sur l'extrémité supérieure du corps 2, autour de deux axes horizontaux 10,11.

Le couvercle 3 se referme sur le corps 2 par une languette ou pêne d'encliquetage 17, et il peut recevoir par ailleurs, dans un orifice adapté 42, une serrure de fermeture (non représentée).

Ce coffret est destiné à recevoir non seulement divers éléments d'interconnexion de fils électriques amenés et extraits par des câbles électriques d'entrée/sortie 4,5,..., mais aussi divers éléments électroniques actifs, généralement sous forme de cartes enfichables qui sont reliées électriquement à ces câbles 4,5.

De ce fait, le fond du corps 2 est garni d'un jeu de rainures verticales 6 et d'un jeu de rainures horizontales 7 qui sont classiquement prévues pour recevoir les vis de maintien des embases réceptrices de ces cartes électroniques ou des organes de connexion de fils.

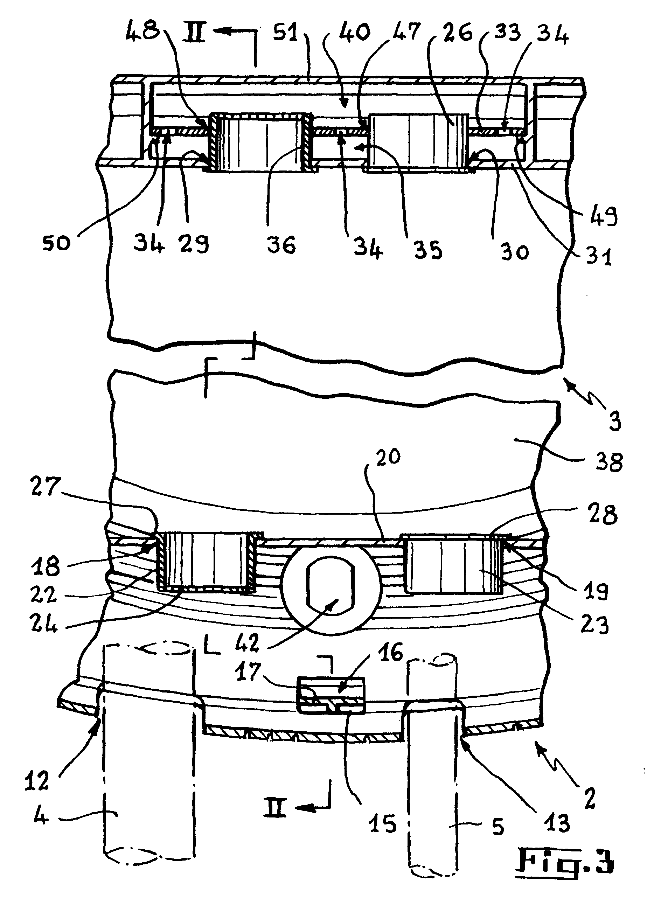

Deux grilles d'aération 8,9 sont classiquement prévues à la partie supérieure du corps 2. Elles coopèrent classiquement avec des entrées d'air qui existent par construction à la partie inférieure de ce boîtier, tant par les entrées de câbles 12,13,14,..., (figure 1) qui sont à section rectangulaire alors que les câbles 4,5,..., sont à section circulaire, que par les relativement gros orifices 15,16 (figures 3 et 5) de passage et débattement de la languette ou pène 17 de fermeture par encliquetage du couvercle 3 sur sa base 2.

Comme mentionné précédemment, ces grilles d'aération sont toutefois insuffisantes pour assurer la ventilation nécessaire à l'intérieur du boîtier que constitue ce coffret, surtout lorsque celui ci contient des circuits électroniques actifs.

Conformément donc à l'invention, une ventilation renforcée supplémentaire est prévue dans ce boîtier, et est due à une configuration très particulière de son couvercle 3, configuration qui présente en outre la caractéristique de sérieusement prendre en compte les impératifs de protection contre les risques de pénétration d'eau.

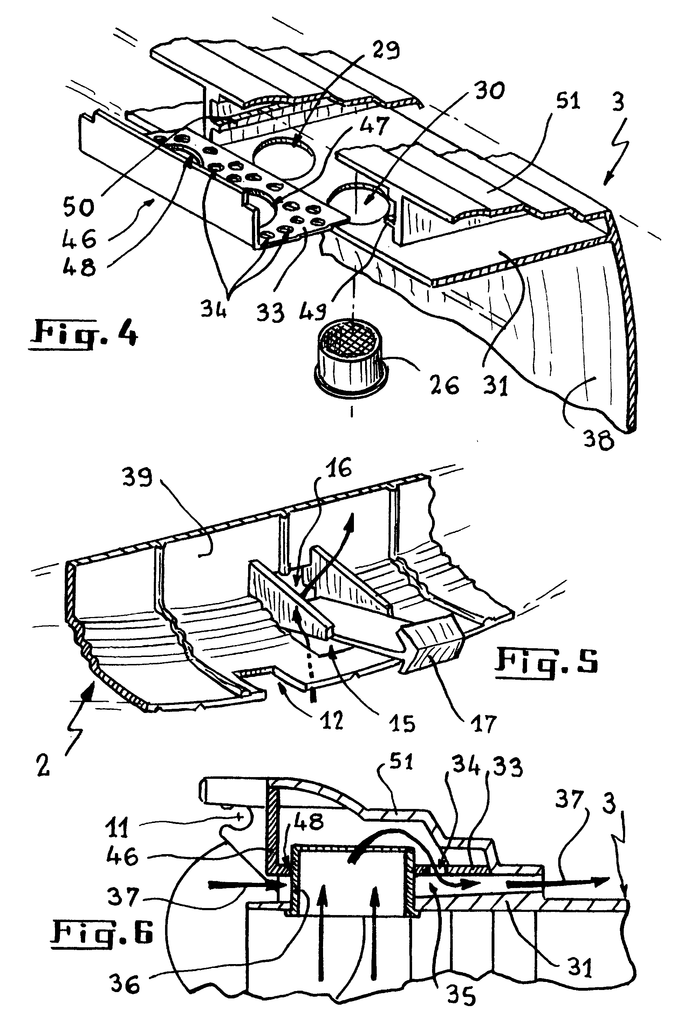

Pour ceci, il est en outre prévu dans ce couvercle 3 (voir aussi les figures 4 à 6) :
- Deux ouvertures circulaires 18,19 dans une première paroi horizontale 20, interne au couvercle 3 et se prolongeant par la paroi 21 du corps 2 qui porte l'ensemble de diaphragmes élastiques 44 de traversée relativement étanche des câbles 4,5. Cette paroi globale 20,21 est située dans la moitié inférieure du boîtier 2,3, et ces ouvertures 18,19 sont garnies chacune d'une coupelle conjuguée 22,23 qui est protubérante vers le bas et dont le fond est formé par une grille 24,25 destinée à éviter la pénétration d'insectes. Une coupelle de ce type est bien visible en perspective sur la figure 4, où elle porte la référence 26 car il s'agit d'une des coupelles supérieures dont il sera question ci après.
   A noter que ces deux coupelles inférieures 22,23, qui sont identiques dans cet exemple de réalisation, sont fixées comme représenté dans leurs orifices circulaires 18,19 après y avoir été enfoncées, selon un coulissement étroit et du haut vers le bas, jusqu'à leur collerette d'arrêt 27,28. Puis elles sont collées une fois bien en position dans ces orifices. Elles forment alors deux cheminées d'alimentation de la partie inférieure du boîtier en air de ventilation. Le fait qu'elles sont protubérantes vers le bas assure la protection souhaitée contre les risques de pénétration d'eau.
- Deux autres ouvertures de même type 29,30 dans une deuxième paroi horizontale 31, interne au couvercle et formant une paroi interne du boîtier par le fait qu'elle vient mordre dans le classique joint d'étanchéité aux trois quarts périphérique 32 du corps 2 et par suite coopérer avec ce joint. Cette seconde paroi 31 est située dans la moitié supérieure du couvercle 3, dont elle délimite, avec la paroi inférieure 20,44, l'habitacle utile, c'est à dire le volume qui contient les connexions électriques ainsi que les cartes électroniques. Ces deux ouvertures 29,30 sont garnies chacune d'une coupelle 26,36 qui est identique à chacune des deux coupelles inférieures 22,23 mais qui est protubérante vers le haut, avec ici aussi un fond formé par une grille destinée à éviter la pénétration d'insectes. Comme précédemment, ces coupelles 26,36 sont collées dans leurs orifices récepteurs conjugués 29,30. Elles forment deux cheminées supérieures d'extraction de l'air de ventilation qui circule selon la flèche 45 dans ledit habitacle utile compris entre les deux parois 20,44 et 31. L'air entre donc par les cheminées inférieures 22,23, circule de bas en haut dans cet habitacle utile selon la flèche 45, et en sort par les deux cheminées supérieures 26 et 36.
- Une aspiration d'air par effet Venturi qui est créé par le fait que ces deux coupelles supérieures 26,36 traversent aussi une autre paroi supérieure interne 33 du couvercle 3, cette paroi 33 étant sensiblement horizontale (elle est, dans cet exemple de réalisation, parallèle à la paroi supérieure 31) et percée d'orifices multiples 34 de passage d'air. La paroi 33 est donc placée au dessus de ladite deuxième paroi interne 31 de manière à délimiter avec celle ci un canal plat, large et peu épais, 35 de passage d'une nappe horizontale 37 (figure 6) de circulation d'air ambiant entre les deux faces verticales 38,39 du boîtier, et elle forme de surcroît la paroi inférieure d'une chambre 40 qui est ménagée dans l'extrémité supérieure du couvercle 3, de sorte que l'air qui circule de bas en haut dans le couvercle 3 passe hermétiquement dans cette dernière chambre 40 par les coupelles supérieures 26,36, et en ressort du haut vers le bas par cette dernière paroi 33 percée de trous 34, pour alors rencontrer la nappe d'air 37 qui circule horizontalement entre ces deux parois supérieures horizontales 31 et 33, ce qui crée ledit effet Venturi . Le sens de circulation de la nappe d'air 37 dépend des conditions d'exposition et de ventilation, à ce moment, du coffret 2,3 .

A particulièrement bien noter que ce canal de circulation 35, et c'est fondamental, a aussi pour rôle de garantir, en combinaison avec les cheminées 26 et 36 qui le traversent, un excellent degré de protection contre la pénétration d'eau, du fait qu'il garantit une bonne circulation et évacuation des eaux de pluie, ou autres.

En fait, comme on le voit bien sur la figure 4, cette chambre supérieure 40 et cette paroi horizontale supérieure 33 sont créées par la coopération de la paroi externe 51 du couvercle 3 et d'une pièce 46 en forme d'équerre dont la grande face est ladite paroi horizontale 33 , cette grande face étant percée non seulement des relativement petits trous 34, mais aussi de deux orifices 47 et 48 qui coopèrent avec les orifices 30 et 29 pour livrer passage, de manière étroite et donc étanche après collage, aux deux coupelles supérieures 26 et 36. Cette équerre 46 s'introduit à fond dans le couvercle 3 en coopérant pour ceci avec des glissières 49 et 50 (figure 4), puis elle est collée dans sa position finale (figure 2). Ce n'est qu'ensuite que les coupelles 26 et 36 sont introduites à force et à fond dans leurs orifices conjugués respectifs 30, 47, et 29,48.

Comme il va de soi, l'invention n'est pas limitée à l'exemple de réalisation qui vient d'être décrit. Dans la description qui précède, toutes les coupelles 18,19,36,26 sont rigoureusement identiques et à section circulaire, mais elles pourraient aussi bien avoir une autre forme, par exemple une section carrée, rectangulaire, ou ovale, et être différentes l'une par rapport à l'autre. Il n'en existe ici que deux par paroi intermédiaire 20 ou 31, mais il pourrait très bien y en avoir plus que deux par paroi, ou à contrario n'y en avoir qu'une seule.

## Revendications

1. Coffret de raccordement de câbles électriques, et/ou de contention de circuits électriques, en particulier de circuits électroniques actifs, ce coffret se présentant sous la forme d'un boîtier, composé d'un corps (2) et d'un couvercle (3), qui est destiné à être fixé en position verticale, généralement sur un poteau vertical ou sur un mur (1),
**caractérisé** en ce que ce couvercle (3) est conformé pour engendrer, dans le volume interne qu'il délimite lorsqu'il est en place sur ledit corps (2), une circulation d'air de bas en haut créée par :
• une entrée d'air dans la partie inférieure du boîtier, typiquement créée essentiellement, de manière connue en soi, par les passages (12,13,14) de câbles ainsi que par les ouvertures (5,16) normalement prévues autour d'un pène (17) de fermeture du couvercle (3) par encliquetage,
• une ou plusieurs ouvertures (18,19) dans une première paroi horizontale (20), interne au boîtier et située dans sa moitié inférieure, cette ou ces ouvertures étant garnies chacune d'une coupelle (22,23) qui est protubérante vers le bas et qui comporte une grille (24,25) destinée à éviter la pénétration d'insectes,
• une ou plusieurs ouvertures (29,30) dans une deuxième paroi horizontale (31), interne au couvercle (3) et située dans sa moitié supérieure, cette ou ces ouvertures étant garnies chacune d'une coupelle (36,26) qui est protubérante vers le haut et qui comporte elle aussi une grille destinée à éviter la pénétration d'insectes,
• une aspiration d'air par effet Venturi qui est créé par le fait que cette ou ces dernières coupelles supérieures (36,26) traversent une autre paroi supérieure interne (33) du couvercle, cette paroi (33) étant elle aussi sensiblement horizontale, étant percée de trous (34) de passage d'air, étant placée au dessus de ladite deuxième paroi interne (31) de manière à délimiter avec celle ci un canal (35) d'évacuation d'eau ainsi que de passage d'une nappe horizontale (37) de circulation d'air ambiant entre les deux faces verticales (38,39) du boîtier, et formant de surcroît la paroi inférieure d'une chambre (40) qui est ménagée dans l'extrémité supérieure du couvercle (3), de sorte que l'air qui circule de bas en haut dans ce couvercle passe dans cette chambre (40) par les coupelles supérieures (36,26) et en ressort par cette dernière paroi (33), qui est par ailleurs percée de trous (34) en conséquence, pour alors rencontrer la nappe d'air (37) qui circule horizontalement entre ces deux parois supérieures horizontales (31,33), ce qui crée ledit effet Venturi .

2. Coffret selon la revendication 1, caractérisé en ce que cette chambre supérieure (40) et cette paroi horizontale supérieure (33) sont créées par la coopération de la face externe (51) du couvercle (3) et d'une pièce (46) en forme d'équerre dont la grande face est ladite paroi horizontale (33), cette grande face (33) étant percée non seulement des, relativement petits, trous (34), mais aussi d'orifices (47 et 48) qui coopèrent avec les orifices (30 et 29) de ladite paroi supérieure (33) pour livrer passage, de manière étroite et donc étanche après collage, aux coupelles supérieures (26 et 36).

3. Coffret selon l'une des revendications 1 ou 2, caractérisé en ce que lesdites coupelles (18,19,26,36) sont toutes identiques.

4. Coffret selon l'une des revendications 1 à 3, caractérisé en ce que lesdites coupelles (18,19,26,36) sont à section circulaire.

## Patentansprüche

1. Gehäuse zur Verbindung elektrischer Kabel und/oder zur Aufnahme elektrischer Schaltungen, insbesondere aktiver elektronischer Schaltungen, wobei das Gehäuse die Form eines Behälters aus einem Körper (2) und einem Deckel (3) hat und zur Befestigung in aufrechter Stellung an einem vertikalen Pfosten oder an einer Mauer (1) bestimmt ist, **dadurch gekennzeichnet,** daß der Deckel (3) so ausgebildet ist, daß er in dem Innenraum, den er nach Anbringung auf dem Körper (2) begrenzt, eine Luftströmung von unten nach oben erzeugt durch
- einen Lufteinlaß im unteren Teil des Behälters, der gewöhnlich im wesentlichen in an sich bekannter Weise durch die Kabeldurchführungen (12, 13, 14) und durch die Öffnungen (5, 16) gebildet wird, die normalerweise um einen Riegel (17) zum Schließen des Deckels (3) durch Einschnappen vorgesehen sind,
- eine oder mehrere Öffnungen (18, 19) in einer ersten waagerechten Wand (20) innen in dem Behälter, die in dessen unterer Hälfte sitzt, wobei diese Öffnung oder diese Öffnungen jeweils mit einem Napf (22, 23) versehen sind, der nach unten vorspringt und ein Gitter (24, 25) gegen das Eindringen von Insekten umfaßt,
- eine oder mehrere Öffnungen (29, 30) in einer zweiten waagerechten Wand (31) innen in dem Deckel (3), die in dessen oberer Hälfte sitzt, welche Öffnung oder welche Öffnungen jeweils mit einem Napf (36, 26) versehen sind, der nach oben vorspringt und ebenfalls ein Gitter gegen das Eindringen von Insekten umfaßt,
- eine Luftansaugung durch Venturi-Effekt, der dadurch erzeugt ist, daß der letztgenannte obere Napf oder die letztgenannten oberen Näpfe (36, 26) eine andere obere Wand (33) innen in dem Deckel durchqueren, wobei die Wand (33) ihrerseits ebenfalls im wesentlichen waagerecht ist und Ausnehmungen (34) für den Luftdurchtritt hat, die oberhalb der zweiten Innenwand (31) sitzen, derart, daß sie mit dieser einen Wasserablaufkanal (35) sowie einen Strömungskanal für eine waagerechte Schicht (37) zur Zirkulation von Umgebungsluft zwischen den zwei vertikalen Flächen (38, 39) des Behälters begrenzt und zusätzlich die untere Wand einer Kammer (40) bildet, die in dem oberen Ende des Deckels (3) ausgebildet ist, derart, daß die Luft, die von unten nach oben in dem Deckel strömt, über die oberen Näpfe (36, 26), in die Kammer (40) eintritt und über die letztgenannte Wand (33), die darüber hinaus hierzu mit Löchern (34) versehen ist, austritt und dann auf die Luftschicht (37) auftrifft, die waagerecht zwischen den zwei oberen waagerechten Wänden (31, 33) strömt, was den genannten Venturi-Effekt erzeugt.

2. Gehäuse nach Anspruch 1, dadurch gekennzeichnet, daß die obere Kammer (40) und die obere waagerechte Wand (33) durch Zusammenwirken der Außenfläche (51) des Deckels (3) und eines Winkelstücks (46) erzeugt wird, dessen Großfläche die waagerechte Wand (33) ist, welche Großfläche (33) nicht nur relativ kleine Löcher (34) sondern auch Öffnungen (47 und 48) hat, die mit den Öffnungen (30 und 29) der oberen Wand (33) zusammenwirken, um nach dem Zusammenfügen einen engen und folglich dichten Durchlaß für die oberen Näpfe (26 und 36) zu bilden.

3. Gehäuse nach einem der Ansprüche 1 oder 2, dadurch gekennzeichnet, daß die Näpfe (18, 19, 26, 36) alle identisch sind.

4. Gehäuse nach einem der Ansprüche 1 bis 3, dadurch gekennzeichnet, daß die Näpfe (18, 19, 26, 36) Kreisquerschnitt haben.

## Claims

1. Cabinet for connecting electric cables and/or for housing electric circuits, in particular active electronic circuits, this cabinet being in the form of a box, composed of a body (2) and a lid (3), which is intended to be attached in vertical position, generally on a vertical post or a wall (1),
characterized in that this lid (3) is shaped to generate, in the internal volume that it defines when it is in position on said body (2), an upward circulation of air created by:
- an air inlet in the lower part of the box, typically created essentially, in manner known per se, by the passages (12, 13, 14) for cables and by the openings (5, 16) normally provided around a bolt (17) for closing the lid (3) by snapping,
- one or more openings (18, 19) in a first horizontal wall (20) inside the box and located in its lower half, this or these openings each being fitted with a downwardly projecting dish (22, 23) and which comprises a grating (24, 25) intended to avoid penetration of insects,
- one or more openings (29, 30) in a second horizontal wall (31) inside the lid (3) and located in its upper half, this or these openings each being fitted with an upwardly projecting dish (36, 26) and which likewise comprises a grating intended to avoid penetration of insects,
- an air suction by Venturi effect which is created by the fact that this or these latter upper dishes (36, 26) pass through another upper inner wall (33) of the lid, this wall (33) likewise being substantially horizontal, being pierced with holes (34) for passage of air, being placed above said second inner wall (31) so as to define therewith a channel (35) for evacuation of water as well as for passage of a horizontal flow (37) of circulating ambient air between the two vertical faces (38, 39) of the box, and forming, moreover, the lower wall of a chamber (40) which is formed in the upper end of the lid (3), so that the air which circulates upwardly in this lid passes in this chamber (40) via the upper dishes (36, 26) and emerges therefrom via this latter wall (33), which is furthermore consequently pierced with holes (34), then encountering the flow of air (37) which circulates horizontally between these two horizontal upper walls (31, 33) which creates said Venturi effect.

2. Cabinet according to Claim 1, characterized in that this upper chamber (40) and this upper horizontal wall (33) are created by the cooperation of the outer face (51) of the lid (3) and of a part (46) in the form of an angle which large face is said horizontal wall (33), this large face (33) being pierced not only with relatively small holes (34), but also with orifices (47 and 48) which cooperate with the orifices (30 and 29) of said upper wall (33) in order to allow passage, closely and therefore tightly after adhesion, for the upper dishes (26 and 36).

3. Cabinet according to one of Claims 1 or 2, characterized in that said dishes (18, 19, 26, 36) are all identical.

4. Cabinet according to one of Claims 1 to 3, characterized in that said dishes (18, 19, 26, 36) are of rounded cross-section.
